# EUROPÄISCHE PATENTSCHRIFT

(11) **EP 0 419 711 B1**
(45) Veröffentlichungstag und Bekanntmachung des Hinweises auf die Patenterteilung: **26.01.1994**
(21) Anmeldenummer: 89117970.7
(22) Anmeldetag: 28.09.1989
(51) Int. Cl.: H04L 12/40

(54) **Schnittstellenbaustein zur Ankopplung modulierter Signale**
Interface module for coupling modulated signals thereto
Module d'interface pour couplage de signaux modulés

(43) Veröffentlichungstag der Anmeldung: 03.04.1991
(73) Patentinhaber: SIEMENS AKTIENGESELLSCHAFT, 80333 München (DE)
(72) Erfinder: Flach, Werner, Dipl.-Ing., D-8450 Amberg (DE)

(56) Entgegenhaltungen:
- GB-A- 2 185 666
- NEW ELECTRONICS.INCORPORATING ELECTRONICS TODAY. vol. 20, no. 18, 15 September 1987, LONDON, GB, Seiten 21-23; A. DENCH: "COMPONENTS & DESIGN TECHNIQUES FOR MIL-STD-1553B IMPLEMENTATION"
- ELEKTRONIK. vol. 33, no. 12, 15 Juni 1984, MUNCHEN, DE, Seiten 97 - 98; H.ABENDROTH: "BUS-FAEHIGE SCHNITTSTELLE NACH RS485/422"

## Beschreibung

Die Erfindung betrifft einen Schnittstellenbaustein gemäß dem Oberbegriff des Anspruchs 1.

Ein derartiger Schnittstellenbaustein ist beispielsweise aus der Zeitschrift "New Electronics", vol. 20 (1987), pp 21-23 bekannt. Das Codieren und Decodieren sowie die Überwachung des Busprotokolls erfolgt dabei im Schnittstellenbaustein. Von daher ist dieser Schnittstellenbaustein nur bei einem spezifischen Busprotokoll verwendbar.

Durch die nicht veröffentliche Patentanmeldung EP-A-0 391 157 ist ein Schnittstellenmodul mit einem anwenderspezifischen Schaltkreis vorgeschlagen, der den Betrieb mit modulierten gleichstromfreien Signalen über eine serielle Busschnittstelle ermöglicht. Dies bringt den Vorteil der Kommunikation zwischen entfernten Teilnehmern über Busse mit hoher Leitungslänge mit sich. Ist ein solcher anwenderspezifischer Baustein vor der Busschnittstelle auf der Seite des Teilnehmers vorhanden, so werden noch angepaßte Anschlußmittel zum Anschluß an den Zweidraht-Linien-Bus benötigt. Die Einbeziehung derartiger Anschlußmittel in die Schaltung des Teilnehmers ist umständlich und unter Umständen unzweckmäßig, wenn z.B. nur wenig Platz hierzu verfügbar ist.

Ausgehend vom eingangs genannten Stand der Technik besteht die Aufgabe der vorliegenden Erfindung darin, einen universell einsetzbaren Schnittstellenbaustein zur Verfügung zu stellen.

Diese Aufgabe wird durch einen Schnittstellenbaustein mit den kennzeichnenden Merkmalen des Anspruchs 1 gelöst. Dieser weist noch den Vorteil der galvanischen Trennung zwischen dem Teilnehmer und dem Zweidraht-Linien-Bus auf.

Sind die ersten Signale frequenzmodulierte oder phasenmodulierte Signale, so lassen sich hiermit lange Leitungslängen (z.B. 7 km) bei niedrigen Datenübertragungsgeschwindigkeiten (z.B. 10 kBd) erreichen.

Es erweist sich als vorteilhaft und einfach, wenn die ersten Mittel durch einen Komparator und eine Spannungsquelle ausgeführt sind.

Eine Verfälschung der zu übertragenden Informationen, z.B. durch Störsignale, läßt sich ausschalten, wenn am Eingang des Empfängers zweite Mittel zur Unterdrückung von Störsignalen vorgesehen sind.

Für den Fall, daß an den Anschlüssen der Wicklung des Transformators auf der Seite des Zweidraht-Linien-Busses ohmsche Widerstände vorgesehen sind, ist selbst bei Kurzschluß dieser Wicklung ein Weiterbetrieb des Zweidraht-Linien-Busses möglich, da die Widerstände sich wie niederohmige Teilnehmer auswirken. Dies bedeutet eine Rückwirkungsfreiheit bei Kurzschluß, die bei verschiedenen Anwendungsgebieten, z.B. in der Verfahrenstechnik als besonders positiv zu werten ist.

Ist zum Anschluß an die Busschnittstelle ein geschirmtes Kabel vorgesehen, welches über eine Anschlußeinheit dem Schnittstellenbaustein an die aus obigen Bauteilen zusammengesetzte Schaltung anschließbar ist, so ist hiermit eine Konfektionierung des Kabels durch den Kunden angepaßt an die vorort benötigten Leitungslängen möglich.

Zum Anschluß eines weiteren Teilnehmers über den Schnittstellenbaustein ist es vorteilhaft, wenn eine zweite Anschlußeinheit mit der ersten Anschlußeinheit gleichen Wirkverbindungen vorgesehen.

Die Ausführung eines Schnittstellenbausteines wird im folgenden anhand einer Zeichnung näher erläutert.

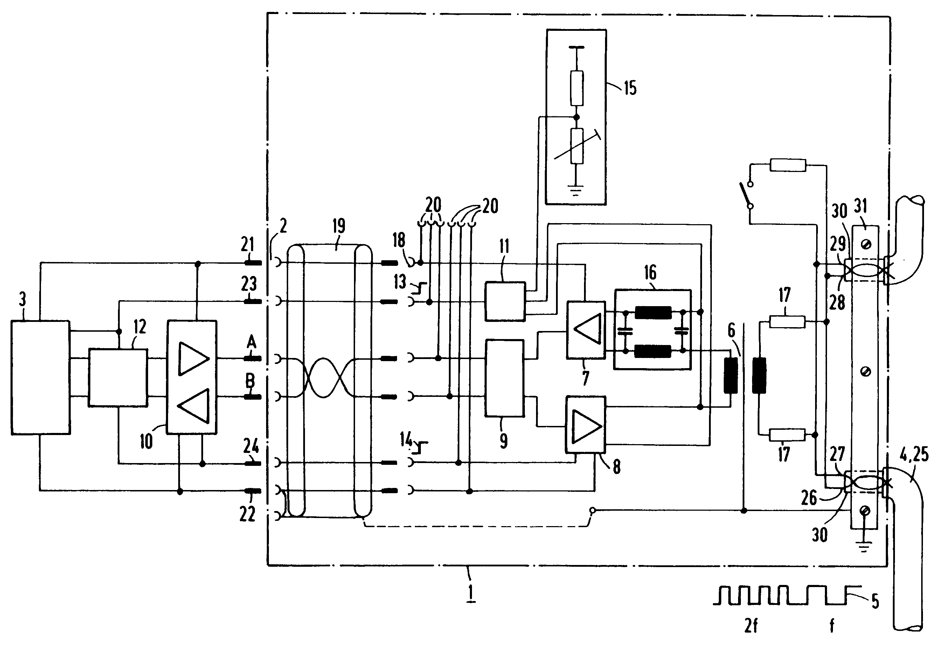

Die Zeichnung zeigt einen Schnittstellenbaustein 1, der zur Verbindung zwischen einer Busschnittstelle 2 eines Teilnehmers 3 eines Kommunikationssystems und einem Zweidraht-Linien-Bus 4 dient. Zur Busschnittstelle 2 gehören sechs Schnittstellenanschlüsse A, B, 21, 22, 23 und 24, die an einen Differenzverstärker 10 geschaltet sind und über die der Signalaustausch mit einem Teilnehmer 3, z.B. einem Mikroprozessor, erfolgt. Zwischen diesem und dem Differenzverstärker 10 ist ein anwenderspezifischer Schaltkreis 12 angeschlossen, der zur Modulation und Demodulation der auf dem Zweidraht-Linien-Bus 4 übertragenen Signale eingesetzt ist. Der Schnittstellenanschluß 21 dient zur Spannungsversorgung des Schnittstellenbausteins 1, während über den Schnittstellenanschluß 22 eine Masseverbindung herstellbar ist. Die beiden anderen Schnittstellenanschlüsse 23, 24 dienen einerseits zur Übertragung eines Sperrsignals 13, welches einen zu unterdrückenden Ruhezustand auf dem Zweidraht-Linien-Bus 4 anzeigt und andererseits zur Übertragung eines Freigabesignals 14, durch welches das Senden der Signale vom Teilnehmer 3 eingeleitet wird.

Der Zweidraht-Linien-Bus 4 ist durch ein geschirmtes, zweiadriges Kabel 25 realisiert, welches zum Anschluß an den Schnittstellenbaustein 1 aufgetrennt ist. Die vier Adern des Kabels sind an vier Anschlußklemmen 26, 27, 28, 29 des Schnittstellenbausteins 1 geklemmt. Die beiden Schirme 30 des Kabels 25 sind zur Entstörung an eine Masseanschlußklemme 31 angeschlossen. Die Anschlußklemmen 26, 28 einerseits und 27, 29 andererseits sind elektrisch miteinander verbunden, wobei zwischen beiden Verbindungspunkten über ohmsche Widerstände 17 die eine Wicklung eines Transformators 6 liegt, dessen andere Wicklung mit einem Sender 8, einem Empfänger 7 und einem Komparator 11 in Verbindung steht. Vor dem Eingang des Empfängers 7 ist zur Unterdrückung von Störsignalen ein mehrstufiges Filter 16 geschaltet. An dem Empfänger 7 und dem Sender 8 ist außerdem ein Differenzverstärker 9 angeschlossen, der andererseits über zwei zur eigentlichen Signalübertragung dienende Leitungen mit zwei Anschlußeinheiten 18, 20 verbunden ist. Ein weiteres geschirmtes Kabel 19 überbrückt die Anschlußklemmen der Anschlußeinheit 18 und der Busschnittstelle 2.

Der anwenderspezifische Schaltkreis 12 setzt die vom Mikroprozessor 3, z.B. in Form eines TTL-Signals gelieferten Informationen in frequenzmodulierte Signale um. Nachdem der anwenderspezifische Schaltkreis 12 dem Sender 8 über den Schnittstellenanschluß 24 ein Freigabesignal 14 gesendet hat, werden die modulierten Signale 5 vom Sender 8 über den Transformator 6 zum Zweidraht-Linien-Bus 4 übertragen. Dabei kann das frequenzmodulierte Signal 5 z.B. ein aus Signalabschnitten mit einer Grundfrequenz f und solchen mit doppelter Grundfrequenz 2f zusammengesetztes Signal sein, das jedoch gleichstromfrei sein muß, damit der Transformator 6 nicht gesättigt wird. Beispielsweise kann hierbei für den Signalzustand 1 sowie den Ruhezustand die Grundfrequenz f und für den Signalzustand 0 die doppelte Grundfrequenz 2f festgelegt sein. Die durch den Transformator 6 zu übertragenden Signale 5 können eine Spannungshöhe in der Größenordnung von 100 mV aufweisen.

Zwischen dem anwenderspezifischen Schaltkreis 12 und dem Sender 8 erfolgt jedoch durch Differenzverstärker 9, 10 zunächst eine Umwandlung in ein Differenzsignal, das in ein moduliertes Signal 5 zurückgewandelt und als solches dem Sender 8 zugeführt wird.

Die vom Zweidraht-Linien-Bus 4 an den Teilnehmer 3 über den Schnittstellenbaustein 1 weitergeleiteten modulierten Signale 5 passieren nach Übertragung durch den Transformator 6 zunächst zur Unterdrückung von Störsignalen ein mehrstufiges Filter 16, bevor sie den Empfänger 7 erreichen und nach diesem nach Zwischenwandlung durch die beiden Differenzverstärker 9, 10 in ein Differenzsignal wieder als moduliertes Signal zum anwenderspezifischen Schaltkreis 12 gelangen. Hier werden die modulierten Signale 5 zur Weiterverarbeitung beim Teilnehmer 3 demoduliert.

Mittels eines Komparators 11, der die modulierten, hinter dem Transformator 6 anstehenden Signale 5 mit einer einstellbaren Spannung einer Spannungsquelle 15 vergleicht, können als Grundrauschen einzustufende Signale einer Auswertung entzogen werden, wofür der Komparator 11 bei Unterschreiten des eingestellten Spannungspegels über den Schnittstellenanschluß 23 ein Sperrsignal 13 an den anwenderspezifischen Schaltkreis 12 sendet.

Dadurch, daß die Busschnittstelle 2 normierte Schnittstellenanschlüsse aufweist, ist durch den zuvor beschriebenen Schnittstellenbaustein 1 ein vielfach zu verwendendes Koppelglied bereitgestellt, das in seiner Handhabung anwenderfreundlich ist, eine galvanische Trennung bietet und zudem eine Kommunikation über lange Leitungslängen bei hohen Datenübertragungsgeschwindigkeiten ermöglicht. Als besonders vorteilhaft erweist sich außerdem die durch den Schnittstellenbaustein 1 gegebene Rückwirkungsfreiheit, z.B. bei Kurzschlüssen.

## Patentansprüche

1. Schnittstellenbaustein (1) als Bindeglied zwischen einer Busschnittstelle (2) eines Teilnehmers (3) eines Kommunikationssystems und einem Zweidraht-Linien-Bus (4), auf dem modulierte erste Signale (5) übertragen werden, wobei der Schnittstellenbaustein (1) ausgehend von seiner Anschlußseite zum Zweidraht-Linien-Bus (4) hin einen Transformator (6) und dazu in Reihe eine Parallelschaltung aus einem Empfänger (7) und einem Sender (8) aufweist, **dadurch gekennzeichnet,** daß der Schnittstellenbaustein (1) einen ersten Differenzverstärker (9) aufweist, der mit einem zweiten Differenzverstärker (10) zusammenarbeitet und weiterhin im Schnittstellenbaustein (1) erste Mittel (11,15) vorgesehen sind, die abhängig vom Pegel der ersten Signale (5) einem zur Modulation und Demodulation der ersten Signale (5) verwendeten anwenderspezifischen Schaltkreis (12) ein Sperrsignal (13) senden, wobei der anwenderspezifische Schaltkreis (12) dem Sender (8) ein Freigabesignal (14) zur Freigabe der zu sendenden ersten Signale (5) sendet.

2. Schnittstellenbaustein nach Anspruch 1, **dadurch gekennzeichnet,** daß die ersten Signale (5) frequenzmodulierte oder phasenmodulierte Signale sind.

3. Schnittstellenbaustein nach Anspruch 1 oder 2, **dadurch gekennzeichnet,** daß die ersten Mittel durch einen Komparator (11) und eine Spannungsquelle (15) ausgeführt sind.

4. Schnittstellenbaustein nach einem der vorangehenden Ansprüche, **dadurch gekennzeichnet,** daß am Eingang des Empfängers (7) zweite Mittel (16) zur Unterdrückung von Störsignalen vorgesehen sind.

5. Schnittstellenbaustein nach einem der vorangehenden Ansprüche, **dadurch gekennzeichnet,** daß an den Anschlüssen der Wicklung des Transformators (6) auf der Seite des Zweidraht-Linien-Busses (4) ohmsche Widerstände (17) vorgesehen sind.

6. Schnittstellenbaustein nach einem der vorhergehenden Ansprüche, **dadurch gekennzeichnet,** daß zum Anschluß an die Busschnittstelle (2) ein geschirmtes Kabel (19) vorgesehen ist, welches über eine erste Anschlußeinheit (18) dem Schnittstellenbaustein (1) an die aus obigen Bauteilen zusammengesetzte Schaltung anschließbar ist.

7. Schnittstellenbaustein nach Anspruch 6, **dadurch gekennzeichnet,** daß eine zweite Anschlußeinheit (20) mit der ersten Anschlußeinheit (18) gleichen Wirkverbindungen vorgesehen ist.

## Claims

1. Interface module (1) as a link between a bus interface (2) of a station (3) of a communications system and a two wire-line-bus (4), on which modulated first signals (5) are transmitted, with the interface module (1) having, starting from the side of its terminal towards the two wire-line-bus (4), a transformer (6) and, in series therewith, a parallel circuit arrangement consisting of a receiver (7) and a transmitter (8), characterised in that the interface module (1) has a first differential amplifier (9) which cooperates with a second differential amplifier (10) and, furthermore, there are provided in the interface module (1) first means (11, 15) which, depending upon the level of the first signals (5), transmit a blocking signal (13) to a application specific integrated circuit (12) which is used for the modulation and demodulation of the first signals (5), with the application specific integrated circuit (12) transmitting to the transmitter (8) an enabling signal (14) for the purpose of enabling the first signals (5) to be transmitted.

2. Interface module according to claim 1, characterised in that the first signals (5) are frequency-modulated or phase-modulated signals.

3. Interface module according to claim 1 or 2, characterised in that the first means are realized by a comparator (11) and a voltage source (15).

4. Interface module according to one of the preceding claims, characterised in that second means (16) are provided at the input of the receiver (7) for the suppression of noise signals.

5. Interface module according to one of the preceding claims, characterised in that ohmic resistors (17) are provided at the terminals of the winding of the transformer (6) on the side of the two wire-line-bus (4).

6. Interface module according to one of the preceding claims, characterised in that a shielded cable (19) is provided for the purpose of connection to the bus interface (2), which cable can be connected by way of a first terminal unit (18) to the interface module (1) to the circuit arrangement composed of the above components.

7. Interface module according to claim 6, characterised in that a second terminal unit (20) is provided, having operative connections similar to the first terminal unit (18).

## Revendications

1. Module d'interface (1) en tant qu'élément de liaison entre une interface de bus (2) d'un abonné (3) d'un système de communication et un bus à ligne bifilaire (4), dans lequel sont transmis des premiers signaux modulés (5), le module d'interface (1) comportant, à partir de son côté de raccordement, en direction du bus à ligne bifilaire (4), un transformateur (6) et, en série avec ce dernier, un circuit parallèle formé d'un récepteur (7) et d'un émetteur (8), caractérisé par le fait que le module d'interface (1) comporte un premier amplificateur différentiel (9), qui coopère avec un second amplificateur différentiel (10), et qu'en outre, dans le module d'interface (1) sont prévus des premiers moyens (11,15), qui, en fonction du niveau des premiers signaux (5), envoient un signal de blocage (13) à un circuit (12) spécifique à l'utilisateur et utilisé pour la modulation et la démodulation des premiers signaux (5), le circuit (12) spécifique à l'utilisateur envoyant à l'émetteur (8) un signal de libération (14) servant à libérer les premiers signaux (5) devant être émis.

2. Module d'interface suivant la revendication 1, caractérisé par le fait que les premiers signaux (5) sont des signaux modulés en fréquence ou modulés en phase.

3. Module d'interface suivant la revendication 1 ou 2, caractérisé par le fait que les premiers moyens sont constitués d'un comparateur (11) et d'une source de tension (15).

4. Module d'interface suivant l'une des revendications précédentes, caractérisé par le fait que des seconds moyens (16) sont prévus à l'entrée du récepteur (7) pour la suppression de signaux parasites.

5. Module d'interface suivant l'une des revendications précédentes, caractérisé par le fait que des résistances ohmiques (17) sont prévues aux bornes de l'enroulement du transformateur (6), sur le côté du bus à ligne bifilaire (4).

6. Module d'interface suivant l'une des revendications précédentes, caractérisé par le fait que pour le raccordement à l'interface de bus (2) il est prévu un câble blindé (19), qui peut être relié, par l'intermédiaire d'une première unité de raccordement (18), au module d'interface (1), au niveau du circuit constitué par les composants indiqués plus haut.

7. Module d'interface suivant la revendication 6, caractérisé par le fait qu'il est prévu une seconde unité de raccordement (20) comportant des liaisons actives identiques à celles de la première unité de raccordement (18).
